# EUROPEAN PATENT SPECIFICATION

(11) **EP 3 969 419 B1**
(45) Date of publication and mention of the grant of the patent: **19.02.2025**
(21) Application number: 20725949.0
(22) Date of filing: 12.05.2020
(51) Int. Cl.: C01B 32/19

(54) **A METHOD FOR THE MANUFACTURE OF GRAPHENE OXIDE FROM EXPANDED KISH GRAPHITE**
VERFAHREN ZUR HERSTELLUNG VON GRAPHENOXID AUS EXPANDIERTEM KISH-GRAFIT
PROCÉDÉ DE FABRICATION D'OXYDE DE GRAPHÈNE À PARTIR DE GRAPHITE PRIMAIRE EXPANSÉ

(30) Priority: 16.05.2019 WO PCT/IB2019/054056
(43) Date of publication of application: 23.03.2022
(73) Proprietor: ArcelorMittal, 1160 Luxembourg (LU)
(72) Inventor: VU, Thi Tan, 33007 Oviedo (ES); SUAREZ SANCHEZ, Roberto, 33401 Aviles Asturias (ES)
(74) Representative: Lavoix
(86) International application number: PCT/IB2020/054458
(87) International publication number: WO 2021/001700

(56) References cited:
- WO-A1-2017/027731
- WO-A1-2018/178842
- US-A1- 2018 327 268
- JUNG-CHUL AN ET AL: "Preparation of Kish graphite-based graphene nanoplatelets by GIC (graphite intercalation compound) via process", JOURNAL OF INDUSTRIAL AND ENGINEERING CHEMISTRY, vol. 26, 1 June 2015 (2015-06-01), KOREA, pages 55 - 60, XP055549211, ISSN: 1226-086X, DOI: 10.1016/j.jiec.2014.12.016

## Description

The present invention relates to a method for the manufacture of graphene oxide from expanded Kish graphite. In particular, graphene oxide will have applications in metal industries including steel, aluminum, stainless steel, copper, iron, copper alloys, titanium, cobalt, metal composite, nickel industries, for example as coating or as a cooling reagent.

Kish graphite is a byproduct generated in the steelmaking process, especially during the blast furnace process or ironmaking process. Indeed, Kish graphite is usually produced on the free surface of molten iron during its cooling. It comes from molten iron at 1300-1500°C, which is cooled at a cooling rate between 0.40°C/min and 25°C/h when transported in the torpedo car or at higher cooling rates during the ladle transfer. An extensive tonnage of Kish graphite is produced annually in a steel plant.

Since Kish graphite comprises a high amount of carbon, usually above 50% by weight, it is a good candidate to produce graphene-based materials. Usually, graphene-based materials include: graphene, graphene oxide, reduced graphene oxide or nanographite.

Graphene oxide is composed of one or few layers of graphene sheets containing oxygen functional groups. Thanks to its interesting properties such as a high thermal conductivity and a high electrical conductivity, graphene oxide has many applications as mentioned above. Moreover, the presence of oxygen functional groups makes it hydrophilic and therefore it can be easily dispersed in water.

Usually, graphene oxide is synthesized based on Hummer Method comprising the following steps:
- the creation of a mixture of Kish graphite, sodium nitrate (NaNO₃) and sulfuric acid (H₂SO₄),
- the addition of sodium or potassium permanganate (KMnO₄) as oxidizing agent to oxidize graphite into graphite oxide and
- the mechanical exfoliation of graphite oxide into monolayer or a few layers of graphene oxide.

The patent application WO2018/178842 discloses a method for the manufacture of graphene oxide from kish graphite comprising:
A. The provision of kish graphite,
B. A pre-treatment step of said kish graphite comprising the following successive sub-steps:
   i. A sieving step wherein the kish graphite is classified by size as follows:
      a) Kish graphite having a size below 50µm,
      b) Kish graphite having a size above or equal to 50µm, the fraction a) of kish graphite having a size below 50µm being removed,
   ii. A flotation step with the fraction b) of kish graphite having a size above or equal to 50µm,
   iii. An acid leaching step wherein an acid is added so that the ratio in weight (acid amount)/(kish graphite amount) is between 0.25 and 1 .0,
   iv. Optionally, the kish graphite is washed and dried and
C. An oxidation step of the pre-treated kish graphite in order to obtain graphene oxide with an acid, sodium nitrate and an oxidizing agent.

Nevertheless, when the oxidation step is performed with sodium nitrate (NaNO₃), toxic gases are produced leading to a polluting method. Moreover, the oxidation time is very long (around 3 hours).

The patent application PCT/IB2019/052804 discloses a method for the manufacture of graphene oxide from kish graphite comprising:
A. The provision of kish graphite,
B. A pre-treatment step of said kish graphite comprising the following successive sub-steps:
   i. A sieving step wherein the kish graphite is classified by size as follows:
      a) Kish graphite having a size below 50µm,
      b) Kish graphite having a size above or equal to 50µm, the fraction a) of kish graphite having a size below 50µm being removed,
   ii. A flotation step with the fraction b) of kish graphite having a size above or equal to 50µm,
   iii. An acid leaching step wherein an acid is added so that the ratio in weight (acid amount)/(kish graphite amount) is between 0.25 and 1 .0,
   iv. Optionally, the kish graphite is washed and dried and
C. An oxidation step of the pre-treated kish graphite in order to obtain graphene oxide with an acid, ammonium nitrate (NH₄NO₃) and an oxidizing agent.

However, although the method using NH₄NO₃ is less polluting than the method using NaNO₃, there is a need to further provide an even less polluting method and to reduce the energy consumption.

Additionally, although the oxidation time is shorter using NH₄NO₃, i.e. 1 hour and 30 minutes, compared to the oxidation time of the method using NaNO₃, i.e. 3 hours, there is still a need to reduce the oxidation time and therefore to improve the productivity of the synthesis of graphene oxide.

The paper "Preparation of Kish graphite-based graphene nanoplatelets by GIC (graphite intercalation compound) via process" by Jung-Chul An et Al, Journal of Industrial and Engineering Chemistry, vol.26, 1 June 2015 also discloses a process for the formation of graphene from Kish graphite comprising the intercalation of the Kish graphite by addition of sulfuric acid, the thermal expansion by microwave treatment, the exfoliation by ultrasonic treatment and recovery of the obtained graphene.

The patent application US2018/327268 also discloses a method for the production of graphene by intercalation/expansion process using graphite as a starting material and a mixture of persulfate and acid as the intercalating compounds.

Therefore, the purpose of the invention is to provide an industrial method to obtain graphene oxide having good quality in the shortest time possible. Additionally, the purpose of the invention is to provide a less polluting method for the manufacture of graphene oxide from Kish graphite compared to the prior art methods.

This is achieved by providing a method for the manufacture of graphene oxide from kish graphite comprising:
A. The provision of kish graphite,
B. Optionally, a pre-treatment of kish graphite,
C. The intercalation of kish graphite with a persulfate salt and an acid at room temperature to obtain intercalated kish graphite, the ratio in weight of persulfate salt with respect to kish graphite being between 1 and 8 and the ratio in weight of the acid with respect to kish graphite being between 2 and 8,
D. The expansion of the intercalated kish graphite at room temperature to obtain expanded kish graphite and
E. An oxidation step of the expanded kish graphite to obtain graphene oxide.

The method according to the invention may also have the optional features listed below, considered individually or in combination:
- In step B), the pre-treatment of kish graphite comprises the following successive sub-steps:
   ▪ A sieving step wherein the kish graphite is classified by size as follows:
      ▪ Kish graphite having a size below 50µm,
      • Kish graphite having a size above or equal to 50µm, the fraction a) of kish graphite having a size below 50 µm being removed,
   ▪ A flotation step with the fraction b) of kish graphite having a size above or equal to 50µm,
   ▪ An acid leaching step wherein an acid is added so that the ratio in weight (acid amount)/(kish graphite amount) is between 0.25 and 1.0,
   ▪ Optionally, the kish graphite is washed and dried,
- In step C), the persulfate salt is chosen from: Sodium persulfate (Na₂S₂O₈), Ammonium persulfate ((NH₄)₂S₂O₈) and Potassium persulfate (K₂S₂O₈) or a mixture thereof,
- In step C), the acid is chosen from: H₂SO₄, HCl, HNO₃, H₃PO₄, C₂H₂Cl₂O₂ (dichloroacetic acid), HSO₂OH (alkylsulfonic acid) or a mixture thereof,
- In step D), the expansion is naturally performed by leaving the kish graphite, the persulfate salt and the acid at room temperature in an open vessel,
- Step E) comprises the following successive sub-steps:
   ▪ The mixture of the expanded kish graphite with an acid chosen from: H₂SO₄, HCl, HNO₃, H₃PO₄, C₂H₂Cl₂O₂ (dichloroacetic acid), HSO₂OH (alkylsulfonic acid) or a mixture thereof and an oxidizing agent chosen from: potassium permanganate, H₂O₂, O₃, H₂S₂O₈, H₂SO₅, KNO₃, NaClO or a mixture thereof,
   ▪ The addition of a chemical element chosen from: an acid, non-deionized water, deionized water, H₂O₂ or a mixture thereof to stop the oxidation reaction,
   ▪ the separation of graphite oxide from the mixture obtained in step E.ii),
   ▪ The exfoliation of graphite oxide into graphene oxide,
- In step E.i), a salt is further added and is a nitrate salt chosen from: NaNO₃, NH₄NO₃, KNO₃, Ni(NO₃)₂, Cu(NO₃)₂, Zn(NO₃)₂, Al(NO₃)₃ or a mixture thereof,
- When at least two chemical elements are chosen to stop the reaction, they are used successively or simultaneously,
- In step E.ii), the mixture obtained in step E.i) is gradually pumped into the chemical element used to stop the oxidation reaction,
- In step E.iii), the graphite oxide is separated by centrifugation, decantation, distillation or filtration,
- In step E.iv), the exfoliation is performed by using ultrasound, mechanical agitator, sieve shaker or thermal exfoliation.

The following terms are defined:
- Graphene oxide means one or a few layer(s) of graphene comprising oxygen functional groups including ketone groups, carboxyl groups, epoxy groups and hydroxyl groups,
- room temperature means between 0 and 45°C at atmospheric pressure.

Other characteristics and advantages of the invention will become apparent from the following detailed description of the invention.

To illustrate the invention, various embodiments and trials of non-limiting examples will be described, particularly with reference to the following figures:
- Figure 1 illustrates an example of one layer of graphene oxide according to the present invention,
- Figure 2 illustrates an example of a few layers of graphene oxide according to the present invention.

The invention relates to a method for the manufacture of graphene oxide from kish graphite comprising:
A. The provision of kish graphite,
B. Optionally, a pre-treatment of kish graphite,
C. The intercalation of kish graphite with a persulfate salt and an acid at room temperature to obtain intercalated kish graphite,
D. The expansion of the intercalated kish graphite at room temperature to obtain expanded kish graphite and
E. An oxidation step of the expanded kish graphite to obtain graphene oxide.

The method according to the present invention allows for the production of graphene oxide having good quality. Moreover, the method including the intercalation at room temperature, the expansion at room temperature and the oxidation into graphene oxide, it is easy to implement at industrial scale and it is less polluting than methods of the prior art.

Without willing to be bound by any theory, it is believed that during the expansion, the persulfate salt acts like an oxidant to oxidize the edges of the kish graphite layers. Since the persulfate salt is an important oxygen donor, the intercalation gap between two kish graphite layers is further improved allowing the acid to enter more easily between the kish graphite layers. At the same time, a certain amount of persulfate salt can be dragged by the acid in the kish graphite interlayers. It is believed that the persulfate salt dragged in the interlayers will decompose and release O₂ gas causing an instantaneous pressure in the kish graphite interlayers making an exponential expansion of graphite at room temperature. The energy consumption is thus reduced and expanded kish graphite is easily obtained.

Moreover, it is believed that using expanded kish graphite according to the present invention significantly reduces the oxidation time compared to the methods for the manufacture of graphene oxide of the prior art. Indeed, it is believed that since there is a higher expansion volume, it is easier to oxidize the kish graphite layers since the gap between two kish graphite layers is higher using the persulfate salt and the acid. Thus, the oxidation time is significantly reduced and graphene oxide is easily obtained.

Preferably, in step A), the Kish graphite is a residue of the steelmaking process. For example, it can be found in a blast furnace plant, in an ironmaking plant, in a steelmaking plant, in the torpedo car and during ladle transfer.

Preferably, in step B), the pre-treatment of kish-graphite comprises the following successive sub-steps:
i. A sieving step wherein the kish graphite is classified by size as follows:
   a) Kish graphite having a size below 50µm,
   b) Kish graphite having a size above or equal to 50µm, the fraction a) of kish graphite having a size below 50 µm being removed,
ii. A flotation step with the fraction b) of kish graphite having a size above or equal to 50µm,
iii. An acid leaching step wherein an acid is added so that the ratio in weight (acid amount)/(kish graphite amount) is between 0.25 and 1.0,
iv. Optionally, the kish graphite is washed and dried.

Without willing to be bound by any theory, it seems that when the kish graphite is pre-treated with the method according to the present invention, it allows for the production of graphene oxide having improved quality since the pre-treated Kish graphite has a high purity. Indeed, the Kish graphite obtained after step B) has a purity of at least 90%. Moreover, the pre-treatment step B) is easy to implement at industrial scale and is more environmentally friendly than conventional methods.

In step B.i), the sieving step can be performed with a sieving machine.

After the sieving, the fraction a) of Kish graphite having a size below 50 µm is removed. Indeed, without willing to bound by any theory, it is believed that the kish graphite having a size below 50µm contains a very small quantity of graphite, for example less than 10%.

Preferably in step B.ii), the flotation step is performed with a flotation reagent in an aqueous solution. For example, the flotation reagent is a frother selected from among: methyl isobutyl carbinol (MIBC), pine oil, polyglycols, xylenol, S-benzyl-S'-n-butyl trithiocarbonate, S,S'-dimethyl trithiocarbonate and S-ethyl-S'-methyl trithiocarbonate. Advantageously, the flotation step is performed using a flotation device.

Preferably, in step B.i), the fraction a) of kish graphite having a size below 55 µm is removed and in step B.ii), the fraction b) of kish graphite has a size above or equal to 55µm. More preferably, in step B.i), the fraction a) of kish graphite having a size below 60 µm is removed and in step B.ii), the fraction b) of kish graphite has a size above or equal to 60µm.

Preferably, in steps B.i) and B.ii), the fraction b) of kish graphite has a size below or equal to 300 µm, any fraction of kish graphite having a size above 300 µm being removed before step B.ii).

More preferably in steps B.i) and B.ii), the fraction b) of kish graphite has a size below or equal to 275 µm, any fraction of kish graphite having a size above 275 µm being removed before step B.ii).

Advantageously, in steps B.i) and B.ii), the fraction b) of kish graphite has a size below or equal to 250 µm, any fraction of kish graphite having a size above 250 µm being removed before step B.ii).

In step B.iii), the (acid amount)/(kish graphite amount) ratio in weight is between 0.25 and 1.0, advantageously between 0.25 and 0.9, more preferably between 0.25 and 0.8. For example, the (acid amount)/(kish graphite amount) ratio in weight is between 0.4 and 1.0, between 0.4 and 0.9 or between 0.4 and 1. Indeed, without willing to be bound by any theory, it seems that if the (acid amount)/(kish graphite amount) ratio is below the range of the present invention, there is a risk that the kish graphite comprises a lot of impurities. Moreover, it is believed that if the (acid amount)/(kish graphite amount) ratio is above the range of the present invention, there is a risk that a huge amount of chemical waste is generated.

Preferably, in step B.iii), the acid is selected among the following elements: hydrochloric acid, phosphoric acid, sulfuric acid, nitric acid or a mixture thereof.

The pre-treated Kish graphite obtained after step B) of the method according to the present invention has a size above or equal to 50µm. The pre-treated Kish graphite has a high purity, i.e. at least of 90%. Moreover, the degree of crystallinity is improved compared to conventional methods allowing higher thermal and electrical conductivities and therefore higher quality.

Once kish graphite has been provided and optionally pre-treated, it is intercalated with a persulfate salt and an acid at room temperature to obtain intercalated kish graphite (step C).

In step C), the ratio in weight of persulfate salt with respect to kish graphite is between 1 and 8, preferably between 1 and 6 and advantageously between 1 and 5. Indeed, if the ratio is below 1, there is a risk that the intercalation, and thus the expansion, is not complete. If the ratio is above 8, there is a risk of reagent waste.

In step C), the ratio in weight of the acid with respect to kish graphite is between 2 and 8, preferably between 4 and 8. Indeed, if the ratio of the acid with respect to kish graphite is below 2, there is a risk that only a part of kish graphite is expanded. If the ratio of the acid with respect to kish graphite is above 8, there is a risk that the expansion occurs very slowly and that the volume expansion decreases. It is believed that the acid in excess prevents the persulfate salt from being dragged in the kish graphite interlayer. Therefore, it prevents the release of oxygen from the decomposition of the persulfate salt and thus the exponential expansion of kish graphite.

Preferably, in step C), the persulfate salt is chosen from the ones containing the peroxydisulfate anion S₂O₈²⁻ More preferably, the persulfate salt is chosen from: Sodium persulfate (Na₂S₂O₈), Ammonium persulfate ((NH₄)₂S₂O₈) and Potassium persulfate (K₂S₂O₈) or a mixture thereof.

Preferably, in step C), the acid is a strong acid. More preferably, the acid is chosen from: H₂SO₄, HCl, HNO₃, H₃PO₄, C₂H₂Cl₂O₂ (dichloroacetic acid), HSO₂OH (alkylsulfonic acid) or a mixture thereof.

Preferably, in step C), kish graphite is first mixed with the acid and then the persulfate salt is added.

Preferably step C) lasts from 2 to 30 minutes.

Once kish graphite has been intercalated, it is expanded (step D).

Preferably, in step D), the expansion is naturally performed by leaving the kish graphite, the persulfate salt and the acid at room temperature in an open vessel. For example, the components are in an opened bowl, opened glassware, opened lab reactor or opened pilot reactor.

Preferably, step D) lasts from 2 to 60 minutes.

Once kish graphite has been expanded, it is oxidized to obtain graphene oxide (step E).

Preferably, step E) comprises the following successive sub-steps:
i. The mixture of the expanded kish graphite, an acid, an oxidizing agent and optionally a salt,
ii. The addition of a chemical element to stop the oxidation reaction,
iii. the separation of graphite oxide from the mixture obtained in step E.ii),
iv. The exfoliation of graphite oxide into graphene oxide.

Thanks to the expanded kish graphite, the oxidation time is significantly reduced compared to the oxidation steps of the prior art. Indeed, the oxidation time can be as short as 10 minutes compared to oxidation times of several hours for the oxidation steps of the prior art. Preferably the oxidation of the expanded kish graphite with an acid, an oxidizing agent and optionally a salt lasts from 5 to 15 minutes. Moreover, it seems that the oxidation of the expanded kish graphite without any salt allows for an even shorter oxidation time. The ability to remove the salt from the oxidation step significantly limits pollution. Thus, preferably, the expanded kish graphite is mixed with an acid and an oxidizing agent, without any salt. In other words, the mixture of step E.i) preferably consists of kish graphite, acid and oxidizing agent.

Optionally, in step E.i), the salt is chosen from: NaNO₃, NH₄NO₃, KNO₃, Ni(NO₃)₂, Cu(NO₃)₂, Zn(NO₃)₂, Al(NO₃)₃ or a mixture thereof. Preferably the ratio in weight of salt with respect to the kish graphite is between 0.2 and 2.

In step E.i), the acid is chosen from: H₂SO₄, HCl, HNO₃, H₃PO₄, C₂H₂Cl₂O₂ (dichloroacetic acid), HSO₂OH (alkylsulfonic acid) or a mixture thereof.

In step E.i), the oxidizing agent is chosen from: potassium permanganate (KMnO₄), H₂O₂, O₃, H₂S₂O₈, H₂SO₅, KNO₃, NaClO or a mixture thereof. Preferably the ratio in weight of oxidizing agent with respect to kish graphite is between 2 and 10.

Then, in step E.ii), the chemical element used to stop the oxidation reaction is chosen from: an acid, non-deionized water, deionized water, H₂O₂ or a mixture thereof.

In a preferred embodiment, when at least two chemical elements are used to stop the reaction, they are used successively or simultaneously. Preferably, deionized water is used to stop the reaction and then H₂O₂ is used to eliminate the rest of the oxidizing agent. In another preferred embodiment, hydrochloric acid is used to stop the reaction and then H₂O₂ is used to eliminate the rest of the oxidizing agent. In another preferred embodiment, H₂O₂ is used to stop the reaction and eliminate the rest of the oxidizing agent by this following reaction:

2KMnO₄ + H₂O₂+ 3H₂SO₄ = 2MnSO₄ +O₂ + K₂SO₄ + 4H₂O.

Without willing to be bound by any theory, it seems that when the chemical element to stop the reaction is added into the mixture, there is a risk that this addition is too exothermic resulting in explosion or splashing. Thus, preferably, the element used to stop the reaction is slowly added into the mixture obtained in step E.i). More preferably, the mixture obtained in step E.i) is gradually pumped into the element used to stop the oxidation reaction. For example, the mixture obtained in step E.i) is gradually pumped into deionized water to stop the reaction.

In step E.iii), the graphite oxide is separated from the mixture obtained in step E.ii). Preferably, the graphene oxide is separated by centrifugation, by decantation or filtration.

Optionally, the graphite oxide is washed. For example, the graphene oxide is washed with an element chosen from among: deionized water, non-deionized water, an acid or a mixture thereof. For example, the acid is selected among the following elements: hydrochloric acid, phosphoric acid, sulfuric acid, nitride acid or a mixture thereof.

Optionally, the graphite oxide is dried, for example with air or at high temperature in the vacuum condition.

Preferably in step E.iv), the exfoliation is performed by using ultrasound, mechanical agitator, sieve shaker or thermal exfoliation. Preferably, the mixture obtained in step E.iii) is exfoliated into one or a few layers of graphene oxide.

By applying the method according to the present invention, graphene oxide comprising at least 43% by weight of oxygen functional groups and having an average lateral size up to 100µm comprising at least one layer sheet is obtained.

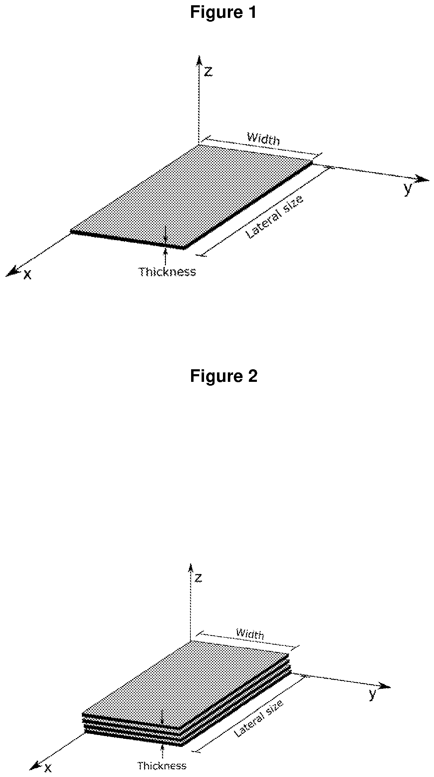

Figure 1 illustrates an example of one layer of graphene oxide according to the present invention. The lateral size means the highest length of the layer through the X axis, the thickness means the height of the layer through the Z axis and the width of the nanoplatelet is illustrated through the Y axis.

Figure 2 illustrates an example of a few layers of graphene oxide according to the present invention. The lateral size means the highest length of the layer through the X axis, the thickness means the height of the layer through the Z axis and the width of the nanoplatelet is illustrated through the Y axis.

The obtained graphene oxide has good quality since it is produced from the pre-treated Kish graphite of the present invention. The percentage of oxygen functionalities is high. Thus, the graphene oxide is easy dispersible in water and other organic solvents.

Preferably, graphene oxide is deposited on metallic substrates to improve some properties such as corrosion resistance of metallic substrates.

In another preferred embodiment, graphene oxide is used as cooling reagent. Indeed, graphene oxide can be added to a cooling fluid. Preferably, the cooling fluid can be chosen from among: water, ethylene glycol, ethanol, oil, methanol, silicone, propylene glycol, alkylated aromatics, liquid Ga, liquid In, liquid Sn, potassium formate and a mixture thereof. In this embodiment, the cooling fluid can be used to cool down a metallic substrate.

For example, the metallic substrate is selected from among: aluminum, steel, stainless steel, copper, iron, copper alloys, titanium, cobalt, metal composite, nickel.

The invention will now be further explained based on trials carried out for information only. They are not limiting.

### Examples:

Trials 1 to 4 were prepared by providing Kish graphite from steelmaking plant. Then, Kish graphite was sieved to be classified by size as follows:
a) Kish graphite having a size below < 63µm and
b) Kish graphite having a size above or equal to 63µm.

The fraction a) of Kish graphite having a size below 63 µm was removed.

A flotation step with the fraction b) of Kish graphite having a size above or equal to 63µm was performed. The flotation step was performed with a Humboldt Wedag flotation machine with MIBC as frother. The following conditions were applied: Cell volume (l): 2, Rotor speed (rpm): 2000, Solid concentration (%): 5-10, Frother, type: MIBC, Frother, addition (g/T): 40, Conditioning time (s): 10 and Water conditions: natural pH, room-temperature.

All Trials were then leached with the hydrochloric acid in aqueous solution with a ratio in weight acid / kish graphite of 0.5. Trials were then washed with deionized water and dried in air at 90º C. The purity of the kish graphite was of 95%.

After, the kish graphite was intercalated at 25 or 35°C for 5 minutes with ammonium persulfate and sulfuric acid with different ratios. The mixture was then left in an open vessel for 5 minutes to let the kish graphite expand. The obtained material is called expanded Kish Graphite.

Trials 1 to 4 were mixed at room temperature with sulfuric acid and KMnO₄ and optionally ammonium nitrate. The mixture contained 1 part by weight of expanded kish Graphite, 3.5 parts by weight of KMnO₄, 100 parts by weight of sulfuric acid and optionally 0.5 part by weight of ammonium nitrate. After the oxidation, the mixtures were gradually pumped into deionized water. H₂O₂ in aqueous solution was added until there was no more gas production and mixtures were stirred to eliminate the rest of H₂O₂.

Then, for all Trials, graphite oxide was separated from the mixture by decantation. It was then exfoliated using ultrasound in order to obtain one or two layer(s) of graphene oxide. Finally, graphene oxide was separated from the mixture by centrifugation, washed with water and dried with air to obtain graphene oxide powder. Graphene oxide was analyzed by scanning electron microscopy (SEM), X ray diffraction spectroscopy (XRD), Transmission electron microscopy (TEM), LECO analysis and Raman spectroscopy.

Trials 5 and 6 correspond respectively to Trials 1 of WO2018/178842 and Trial 1 of PCT/IB2019/052804. Table 1 shows the results obtained.

The method of Trials 1 to 4 is more environment-friendly than comparative Trials. Moreover, the oxidation time with the method of Trials 1 to 4 is significantly lowered compared to the methods of the prior art illustrated with Trials 5 and 6.

Trials 3 and 4 with the intercalation and expansion steps performed at 35°C confirmed that ambient temperature or 25°C (Trials 1 and 2) is enough to obtain graphene oxide comprising a high percentage of oxygen groups.

Trials 2 and 4 with oxidation times of 1 hour confirmed that oxidation times longer than respectively 10 minutes (Trial 1) and 30 minutes (Trial 3) do not improve any further the quality of the graphene oxide. In other words, extremely short oxidation times are enough to sufficiently oxidize the expanded kish graphite. This significantly reduces the energy consumption.

Trials 1 also confirmed that expanded kish graphite can be oxidized without salt even faster than with salt (Trial 3)). The ability to remove the salt from the oxidation step significantly limits pollution.

| Method | | Trial 1 * | Trial 2* | Trial 3* | Trial 4* | Trial 5 (Trial 1 of WO2018/178842) | Trial 6 (Trial 1 of PCT/IB2019/052804) |
|---|---|---|---|---|---|---|---|
| Origin of Kish graphite | | Steelmaking plant | Steelmaking plant | Steelmaking plant | Steelmaking plant | Steelmaking plant | Steelmaking plant |
| Pre-treatment of Kish graphite Sieving step | | Done | Done | Done | Done | Done | Done |
| Intercalation | Compounds | (NH4)2S₂O₈ and H₂SO₄, 25°C | (NH4)₂S₂O₈ and H₂SO₄, 25°C | (NH₄)₂S₂O₈ and H₂SO₄, 35°C | (NH₄)₂S₂O₈ and H₂SO₄, 35°C | - | - |
| | Ratio in weight of persulfate salt / kish graphite | 3 | 3 | 3 | 3 | - | - |
| | Ratio in weight of acid / kish graphite | 6 | 6 | 6 | 6 | - | - |
| Expansion | | Static, 25°C | Static, 25°C | Static, 35°C | Static, 35°C | - | - |
| Oxidation step | Mixture | Done with H₂SO₄, KMnO₄ | Done with H₂SO₄, KMnO₄ | Done with H₂SO₄, KMnO₄ and NH₄NO₃ | Done with H₂SO₄, KMnO₄ and NH₄NO₃ | Done with H₂SO₄ and NaNO₃ | Done with H₂SO₄ and NH₄NO₃ |
| | Oxidation time | 10 minutes | 1h | 30 minutes | 1h | 3h | 1h30min |
| | Element to stop the reaction | Water followed by H₂O₂ | Water followed by H₂O₂ | Water followed by H₂O₂ | Water followed by H₂O₂ | Water followed by H₂O₂ | Water followed by H₂O₂ |
| | Exfoliation | Ultrasound | Ultrasound | Ultrasound | Ultrasound | Ultrasound | Ultrasound |
| Product obtained | | GO comprising 43% of oxygen groups, average Lateral size up to 100µm, purity of 99.8 % | GO comprising 46% of oxygen groups, average Lateral size up to 100µm, purity of 99.9 % | GO comprising 47% of oxygen groups, average Lateral size up to 100µm, purity of 99.7% | GO comprising 45% of oxygen groups, average Lateral size up to 70µm, purity of 99.8% | GO comprising 40% of oxygen groups, Lateral size from 20 to 35 µm, purity of 99.5% | GO comprising 49% of oxygen groups, average Lateral size from 10 to 20 µm, purity of 99,5 % |

| | | | | | | | |
|---|---|---|---|---|---|---|---|
| * according to the present invention | | | | | | | |

## Claims

1. Method for the manufacture of graphene oxide from kish graphite comprising:
A. The provision of kish graphite,
B. Optionally, a pre-treatment of kish graphite,
C. The intercalation of kish graphite with a persulfate salt and an acid at room temperature to obtain intercalated kish graphite, the ratio in weight of persulfate salt with respect to kish graphite being between 1 and 8 and the ratio in weight of the acid with respect to kish graphite being between 2 and 8,
D. The expansion of the intercalated kish graphite at room temperature to obtain expanded kish graphite and
E. An oxidation step of the expanded kish graphite to obtain graphene oxide.

2. Method according to claim 1, wherein in step B), the pre-treatment of kish graphite comprises the following successive sub-steps:
i. A sieving step wherein the kish graphite is classified by size as follows:
a) Kish graphite having a size below 50µm,
b) Kish graphite having a size above or equal to 50µm, the fraction a) of kish graphite having a size below 50 µm being removed,
ii. A flotation step with the fraction b) of kish graphite having a size above or equal to 50µm,
iii. An acid leaching step wherein an acid is added so that the ratio in weight (acid amount)/(kish graphite amount) is between 0.25 and 1.0,
iv. Optionally, the kish graphite is washed and dried.

3. Method according to any one of claims 1 or 2, wherein in step C), the persulfate salt is chosen from: Sodium persulfate (Na₂S₂O₈), Ammonium persulfate ((NH₄)₂S₂O₈) and Potassium persulfate (K₂S₂O₈) or a mixture thereof.

4. Method according to any one of claims 1 to 3, wherein in step C), the acid is chosen from: H₂SO₄, HCl, HNO₃, H₃PO₄, C₂H₂Cl₂O₂ (dichloroacetic acid), HSO₂OH (alkylsulfonic acid) or a mixture thereof.

5. Method according to any one of claims 1 to 4, wherein in step D), the expansion is naturally performed by leaving the kish graphite, the persulfate salt and the acid at room temperature in an open vessel.

6. Method according to any one of claims 1 to 5, wherein step E) comprises the following successive sub-steps:
i. The mixture of the expanded kish graphite with an acid chosen from: H₂SO₄, HCl, HNO₃, H₃PO₄, C₂H₂Cl₂O₂ (dichloroacetic acid), HSO₂OH (alkylsulfonic acid) or a mixture thereof and an oxidizing agent chosen from: potassium permanganate, H₂O₂, O₃, H₂S₂O₈, H₂SO₅, KNO₃, NaClO or a mixture thereof,
ii. The addition of a chemical element chosen from: an acid, non-deionized water, deionized water, H₂O₂ or a mixture thereof to stop the oxidation reaction,
iii. the separation of graphite oxide from the mixture obtained in step E.ii),
iv. The exfoliation of graphite oxide into graphene oxide.

7. Method according to claim 6, wherein in step E.i), a salt is further added and is a nitrate salt chosen from: NaNO₃, NH₄NO₃, KNO₃, Ni(NO₃)₂, Cu(NO₃)₂, Zn(NO₃)₂, Al(NO₃)₃ or a mixture thereof.

8. Method according to claim 6, wherein when at least two chemical elements are chosen to stop the reaction, they are used successively or simultaneously.

9. Method according to any one of claims 6 to 8, wherein in step E.ii), the mixture obtained in step E.i) is gradually pumped into the chemical element used to stop the oxidation reaction.

10. Method according to any one of claims 6 to 9, wherein in step E.iii), the graphite oxide is separated by centrifugation, decantation, distillation or filtration.

11. Method according to any one of claims 6 to 10, wherein in step E.iv), the exfoliation is performed by using ultrasound, mechanical agitator, sieve shaker or thermal exfoliation.

## Patentansprüche

1. Verfahren zur Herstellung von Graphenoxid aus Primärgraphit, umfassend:
A. Das Bereitstellen von Primärgraphit,
B. Optional eine Vorbehandlung von Primärgraphit,
C. Die Interkalation von Primärgraphit mit einem Persulfatsalz und einer Säure bei Raumtemperatur, um interkalierten Primärgraphit zu erlangen, wobei das Gewichtsverhältnis des Persulfatsalzes in Bezug auf den Primärgraphit zwischen 1 und 8 ist und das Gewichtsverhältnis der Säure in Bezug auf den Primärgraphit zwischen 2 und 8 ist,
D. die Expansion des interkalierten Primärgraphits bei Raumtemperatur, um expandierten Primärgraphit zu erlangen, und
E. einen Oxidationsschritt des expandierten Primärgraphits, um Graphenoxid zu erlangen.

2. Verfahren nach Anspruch 1, wobei in Schritt B) die Vorbehandlung von Primärgraphit die folgenden aufeinanderfolgenden Teilschritte umfasst:
i. Einen Siebungsschritt, wobei der Primärgraphit wie folgt nach Größe klassifiziert wird:
a) Primärgraphit mit einer Größe von weniger als 50 µm,
b) Primärgraphit, der eine Größe von mehr als oder gleich wie 50 µm aufweist, wobei die Fraktion a) des Primärgraphits mit einer Größe unter 50 µm entfernt wird,
ii. Einen Flotationsschritt mit der Fraktion b) von Primärgraphit mit einer Größe von mehr als oder gleich wie 50 µm,
iii. Einen Säureauslaugungsschritt, bei dem eine Säure hinzugefügt wird, sodass das Gewichtsverhältnis (Säuremenge)/(Primärgraphitmenge) zwischen 0,25 und 1,0 ist,
iv. Wobei optional der Primärgraphit gewaschen und getrocknet wird.

3. Verfahren nach einem der Ansprüche 1 oder 2, wobei in Schritt C) das Persulfatsalz ausgewählt ist aus: Natriumpersulfat (Na₂S₂O₈), Ammoniumpersulfat ((NH₄)₂S₂O₈) und Kaliumpersulfat (K₂S₂O₈) oder einem Gemisch davon.

4. Verfahren nach einem der Ansprüche 1 bis 3, wobei in Schritt C) die Säure ausgewählt ist aus: H₂SO₄, HCl, HNO₃, H₃PO₄, C₂H₂Cl₂O₂ (Dichloressigsäure), HSO₂OH (Alkylsulfonsäure) oder einem Gemisch davon.

5. Verfahren nach einem der Ansprüche 1 bis 4, wobei in Schritt D) die Expansion natürlich dadurch erfolgt, dass der Primärgraphit, das Persulfatsalz und die Säure bei Raumtemperatur in einem offenen Gefäß belassen wird.

6. Verfahren nach einem der Ansprüche 1 bis 5, wobei Schritt C) die folgenden aufeinanderfolgenden Teilschritte umfasst:
i. Das Mischen des expandierten Primärgraphits mit einer Säure, ausgewählt aus: H₂SO₄, HCl, HNO₃, H₃PO₄, C₂H₂Cl₂O₂ (Dichloressigsäure), HSO₂OH(Alkylsulfonsäure) oder einem Gemisch davon und einem Oxidationsmittel, ausgewählt aus: Kaliumpermanganat, H₂O₂, O₃, H₂S₂O₈, H₂SO₅, KNO₃, NaClO oder einem Gemisch davon,
ii. Das Hinzufügen eines chemischen Elements, ausgewählt aus: einer Säure, nicht entionisiertem Wasser, entionisiertem Wasser, H₂O₂ oder einem Gemisch davon, um die Oxidationsreaktion zu stoppen,
iii. das Abtrennen von Graphenoxid aus dem in Schritt E.ii) erlangten Gemisch,
iv. Die Exfoliation von Graphitoxid in Graphenoxid.

7. Verfahren nach Anspruch 6, wobei in Schritt E.i) ferner ein Salz hinzugefügt wird und ein Nitratsalz ist, ausgewählt aus: NaNO₃, NH₄NO₃, KNO₃, Ni(NO₃)₂, Cu(NO₃)₂, Zn(NO₃)₂, Al(NO₃)₃ oder einem Gemisch davon.

8. Verfahren nach Anspruch 6, wobei, wenn mindestens zwei chemische Elemente zum Stoppen der Reaktion ausgewählt werden, diese nacheinander oder gleichzeitig verwendet werden.

9. Verfahren nach einem der Ansprüche 6 bis 8, wobei in Schritt E.ii) das in Schritt E.i) erlangte Gemisch allmählich in das chemische Element gepumpt wird, das zum Stoppen der Oxidationsreaktion verwendet wird.

10. Verfahren nach einem der Ansprüche 6 bis 9, wobei in Schritt E.iii) das Graphitoxid durch Zentrifugieren, Dekantieren, Destillieren oder Filtrieren abgetrennt wird.

11. Verfahren nach einem der Ansprüche 6 bis 10, wobei in Schritt E.iv) die Exfoliation unter Verwendung von Ultraschall, mechanischem Rührwerk, Siebrüttler oder thermischer Exfoliation durchgeführt wird.

## Revendications

1. Procédé de fabrication d'oxyde de graphène à partir de graphite primaire comprenant :
A. La fourniture de graphite primaire,
B. Éventuellement, un prétraitement du graphite primaire,
C. L'intercalation de graphite primaire avec un sel de persulfate et un acide à température ambiante pour obtenir du graphite primaire intercalé, le rapport en poids du sel de persulfate par rapport au graphite primaire étant compris entre 1 et 8 et le rapport en poids de l'acide par rapport au graphite primaire étant compris entre 2 et 8,
D. L'expansion du graphite primaire intercalé à température ambiante pour obtenir du graphite primaire expansé, et
E. Une étape d'oxydation du graphite primaire expansé pour obtenir de l'oxyde de graphène.

2. Procédé selon la revendication 1, dans lequel, à l'étape B), le prétraitement du graphite primaire comprend les sous-étapes successives suivantes :
i. Une étape de tamisage dans laquelle le graphite primaire est classé par taille comme suit :
a) Le graphite primaire présentant une taille inférieure à 50 µm,
b) Le graphite primaire présentant une taille supérieure ou égale à 50 µm, la fraction a) de graphite primaire présentant une taille inférieure à 50 µm étant éliminée,
ii. Une étape de flottation avec la fraction b) de graphite primaire présentant une taille supérieure ou égale à 50 µm,
iii. Une étape de lixiviation acide dans laquelle un acide est ajouté de sorte que le rapport en poids (quantité d'acide)/(quantité de graphite primaire) est compris entre 0,25 et 1,0,
iv. Éventuellement, le graphite primaire est lavé et séché.

3. Procédé selon l'une quelconque des revendications 1 ou 2, dans lequel, à l'étape C), le sel de persulfate est choisi parmi : Du persulfate de sodium (Na₂S₂O₈), du persulfate d'ammonium ((NH₄)₂S₂O₈) et du persulfate de potassium (K₂S₂O₈) ou un mélange de ceux-ci.

4. Procédé selon l'une quelconque des revendications 1 à 3, dans lequel, à l'étape C), l'acide est choisi parmi : H₂SO₄, HCl, HNO₃, H₃PO₄, C₂H₂Cl₂O₂ (acide dichloracétique), HSO₂OH (acide alkylsulfonique) ou un mélange de ceux-ci.

5. Procédé selon l'une quelconque des revendications 1 à 4, dans lequel, à l'étape D), l'expansion est naturellement réalisée en laissant le graphite primaire, le sel de persulfate et l'acide à température ambiante dans un récipient ouvert.

6. Procédé selon l'une quelconque des revendications 1 à 5, dans lequel l'étape E) comprend les sous-étapes suivantes :
i. Le mélange du graphite primaire expansé avec un acide choisi parmi les suivants : H₂SO₄, HCl, HNO₃, H₃PO₄, C₂H₂Cl₂O₂ (acide dichloracétique), HSO₂OH (acide alkylsulfonique) ou un mélange de ceux-ci et un agent oxydant choisi parmi : le permanganate de potassium, H₂O₂, O₃, H₂S₂O₈, H₂SO₅, KNO₃, NaClO ou un mélange de ceux-ci,
ii. L'ajout d'un élément chimique choisi parmi : un acide, de l'eau non désionisée, de l'eau désionisée, de l'H₂O₂ ou un mélange de ces éléments pour arrêter la réaction d'oxydation,
iii. la séparation de l'oxyde de graphite du mélange obtenu à l'étape E.ii),
iv. L'exfoliation de l'oxyde de graphite en oxyde de graphène.

7. Procédé selon la revendication 6, dans lequel, à l'étape E.i), un sel est ajouté et est un sel de nitrate choisi parmi : NaNO₃, NH₄NO₃, KNO₃, Ni(NO₃)₂, Cu(NO₃)₂, Zn(NO₃)₂, Al(NO₃)₃ ou un mélange de ceux-ci.

8. Procédé selon la revendication 6, dans lequel, lorsqu'au moins deux éléments chimiques sont choisis pour arrêter la réaction, ils sont utilisés successivement ou simultanément.

9. Procédé selon l'une quelconque des revendications 6 à 8, dans lequel, à l'étape E.ii), le mélange obtenu à l'étape E.i) est pompé progressivement dans l'élément chimique utilisé pour arrêter la réaction d'oxydation.

10. Procédé selon l'une quelconque des revendications 6 à 9, dans lequel à l'étape E.iii), l'oxyde de graphite est séparé par centrifugation, par décantation, par distillation ou par filtration.

11. Procédé selon l'une quelconque des revendications 6 à 10, dans lequel à l'étape E.iv), l'exfoliation est réalisée en utilisant des ultrasons, un agitateur mécanique, un agitateur à tamis ou une exfoliation thermique.
